# EUROPEAN PATENT APPLICATION

(11) **EP 4 811 466 A1**
(43) Date of publication of application: **23.09.2026**
(21) Application number: 24913539.3
(22) Date of filing: 24.12.2024
(51) Int. Cl.: H01M 4/90, H01M 4/88, H01M 8/18, H01M 8/24

(54) **METHOD FOR MANUFACTURING MANGANESE OXIDE-SUPPORTED ELECTRODE, AND REDOX FLOW BATTERY**

(30) Priority: 26.12.2023 KR 20230191270; 23.12.2024 KR 20240194183
(71) Applicant: Korea Electronics Technology Institute, Bundang-gu, Seongnam-si Gyeonggi-do 13509 (KR)
(72) Inventor: KIM, Youngkwon, Seongnam-si Gyeonggi-do 13601 (KR); KWAK, Myung Jun, Seongnam-si Gyeonggi-do 13208 (KR)
(74) Representative: Isarpatent
(86) International application number: PCT/KR2024/021025
(87) International publication number: WO 2025/143748

(57) **Abstract**

The present invention relates to: a method for manufacturing a permanganate solution-supported electrode as an electrode for a redox flow battery; and an electrode. An electrode is manufactured by preparing a permanganate solution according to the concentration of permanganate, immersing a porous carbon electrode for a predetermined time, drying same, and then allowing manganese oxide to be supported on the surface of the porous carbon electrode through a heat treatment process, and the electrode is used for an electrode for a redox flow battery.

## Description

### [Technical Field]

The present invention relates to a method for manufacturing a carbon-based electrode applied to a redox flow battery, and more particularly, to a method for manufacturing a manganese oxide-supported electrode and a redox flow battery comprising the same.

### [Background Art]

Vanadium redox flow batteries (VRFBs) are electrochemical energy storage means primarily used as renewable energy storage devices. VRFBs are attracting attention in grid-scale energy storage systems due to their stability, long cycle life, and high scalability.

In a vanadium redox flow battery, charging is performed as tetravalent vanadium ions are converted to pentavalent vanadium ions at the positive electrode and trivalent vanadium ions are converted to divalent vanadium ions at the negative electrode. Discharging is performed as the oxidation number of vanadium ions change in reverse.

Redox flow batteries have the advantage of being able to stack multiple electrodes, can be designed to separate power output and energy capacity, and have excellent safety, making them a system expected to be utilized as a long-life energy storage system (ESS). However, despite these advantages, the ESS using the vanadium redox flow battery has low utilization due to the low current density (<120 mA/cm²) and low energy density (17 Wh/L) of the stack and low energy efficiency caused by BOP power loss.

To increase the power output of the vanadium redox flow battery, it is necessary to improve the power output of the stack. Basically, this requires a technology that maximizes electrode activation under high current density conditions.

Generally, to improve the electrode activation in the vanadium redox flow battery, methods such as heat treatment, acid treatment, and electrochemical treatment of porous carbon-based electrodes (e.g., carbon felt, carbon paper) have been widely used to enhance surface functional groups and surface rugosity. In particular, surface modification of carbon felt through heat treatment is the most commonly employed method.

Conventional heat treatment methods have widely utilized processes at approximately 400 to 500°C for 1 to 5 hours to introduce oxygen functional groups to the surface, thereby enhancing hydrophilicity and improving reaction characteristics.

To enhance energy efficiency and electrode activation, various technologies for introducing metal oxide catalysts onto electrodes have been developed. Among these, techniques for introducing manganese oxide, which is relatively low-cost, onto electrodes have been explored. However, their applicability remains limited due to performance issues and the complexity of manufacturing processes (e.g., hydrothermal synthesis).

Therefore, there is a need for a new method for manufacturing a manganese oxide-introduced electrode that involves a simple manufacturing process and is capable of enhancing electrochemical reaction characteristics and energy efficiency under high current density (> 120 mA/cm²) conditions.

### [Disclosure]

### [Technical Problem]

The present invention relates to manufacturing a manganese oxide-supported electrode by using permanganate on a porous carbon-based electrode, and aims to provide a simple method utilizing a conventional heat treatment process.

The object of the present invention is to provide an electrode manufacturing method and an electrode produced thereby, which enables manganese oxide support, surface area enhancement, introduction of oxygen functional groups, and heteroatom doping in a single process. This method improves the affinity between an electrolyte and a porous carbon-based electrode and promotes the oxidation and reduction reactions of vanadium, thereby overall enhancing battery efficiency under high current density conditions. Furthermore, another object of the present invention is to provide a vanadium redox flow battery and a stacked secondary battery comprising the same.

### [Technical Solution]

To achieve the above objects, the present invention provides a method for manufacturing a manganese oxide-supported electrode, including: immersing a carbon-based electrode in a permanganate solution; and drying and heat-treating the immersed electrode.

Preferably, the permanganate solution is a phosphorus-based organic cation permanganate solution or an ammonium-based organic cation permanganate solution.

Preferably, a concentration of the permanganate solution is 0.01 mg/mL to 100 mg/mL.

Preferably, the immersion time is 15 to 30 minutes.

Preferably, the drying is performed at a temperature of 150°C or lower for 1 to 10 hours.

Preferably, the heat treatment process may adopt at least one type of gas selected from Air, Ar, N₂, and CO₂, a heat treatment temperature is between 100°C and 1,500°C, and a heat treatment time is 0.5 to 48 hours.

Preferably, the method may be performed as a continuous process.

The present invention provides a manganese oxide-supported electrode manufactured by the above method.

Preferably, the electrode supports manganese oxide having an oxidation number of +2 to +4 on its surface, in the form of MnO, Mn₃O₄, or MnO₂.

Preferably, the manganese oxide is in the form of nanoparticles with a size of 10 to 500 nm.

The present invention provides a redox flow battery including the manganese oxide-supported electrode.

Preferably, the redox flow battery is a vanadium redox flow battery.

### [Advantageous Effects]

The electrode manufacturing method of the present invention enables the support of manganese oxide on the electrode surface through a heat treatment process after supporting an organic cation permanganate. This method has the advantage of increasing process efficiency because organic cations can be removed during the heat treatment, eliminating the need for additional posttreatment processes. In addition, the high oxidizing power of the permanganate allows for the oxidation of the carbon-based electrode surface, thereby increasing the electrode surface area and introducing oxygen functional groups. Furthermore, since various organic cations of the organic cation permanganate can be utilized, it is possible to dope heteroatoms, such as nitrogen or phosphorus, which can promote electrode activity during the manganese oxide support process.

### [Description of Drawings]

FIG. 1 is a schematic diagram illustrating a method for manufacturing a manganese oxide-supported electrode according to an embodiment of the present invention.
FIG. 2 shows the results of evaluating the room-temperature storage stability of a methyl triphenyl phosphonium permanganate (MTPMnO₄) solution.
FIG. 3 shows scanning electron microscope (SEM) images of the surfaces of electrodes according to Examples and Comparative Examples.
FIG. 4 shows energy dispersive X-ray spectroscopy (EDS) analysis results of the surfaces of the electrodes according to Examples 6 and 8.
FIG. 5 shows X-ray diffraction (XRD) results of the electrode according to Example 6.
FIG. 6 shows the results of specific surface area and pore analysis of the electrodes according to Example 6 and Comparative Examples 1 and 2.
FIG. 7 shows the surface Mn 2p and P 1s X-ray photoelectron spectroscopy (XPS) analysis results of the electrode according to Example 8.
FIG. 8 shows the surface O 1s XPS analysis results of the electrodes according to Example 6 and Comparative Examples 1 and 2.
FIG. 9 shows the results of catholyte-anolyte cyclic voltammetry (CV) evaluation for the electrodes according to Examples 6 and 8 and Comparative Examples 1 and 2.
FIGS. 10 and 11 are charge/discharge voltage curves of vanadium redox flow batteries using the electrodes according to Examples 6 and 8 and Comparative Examples 1 and 2.

### [Mode for Disclosure]

The present invention provides a method for manufacturing an electrode having manganese oxide supported on a surface of a carbon-based electrode, and the electrode produced thereby. This can effectively improve the voltage efficiency and energy efficiency of a redox flow battery under high current density conditions by enhancing the electrochemical reaction characteristics of the redox flow battery.

The present invention increases the surface area of a carbon-based electrode by supporting manganese oxide on a porous carbon-based electrode using a permanganate solution, followed by heat treatment. The permanganate is preferably an organic cation permanganate, such as a phosphorus-based organic cation permanganate or an ammonium-based organic cation permanganate. Specifically, various types of phosphonium permanganate or alkylammonium permanganate may be used.

The phosphonium permanganate may include: benzylalkylphosphonium permanganate, such as benzylmethylphosphonium permanganate, benzylethylphosphonium permanganate, benzylmethyldiphenylphosphonium permanganate, benzyltributylphosphonium permanganate, or benzylpropylphosphonium permanganate; alkylphosphonium permanganate, such as methylphosphonium permanganate, ethylphosphonium permanganate, butylphosphonium permanganate, or hexylphosphonium permanganate; or S-methyl benzylphosphonium permanganate. The alkylphosphonium permanganate may be prepared through a precipitation reaction by dissolving an alkylphosphonium salt and a potassium permanganate salt in water.

As the alkylammonium permanganate, tetrabutylammonium permanganate or tetradecyltrimethylammonium permanganate may be used.

In addition, the present invention provides a vanadium redox flow battery and a stacked secondary battery comprising the manganese oxide-supported porous carbon-based electrode.

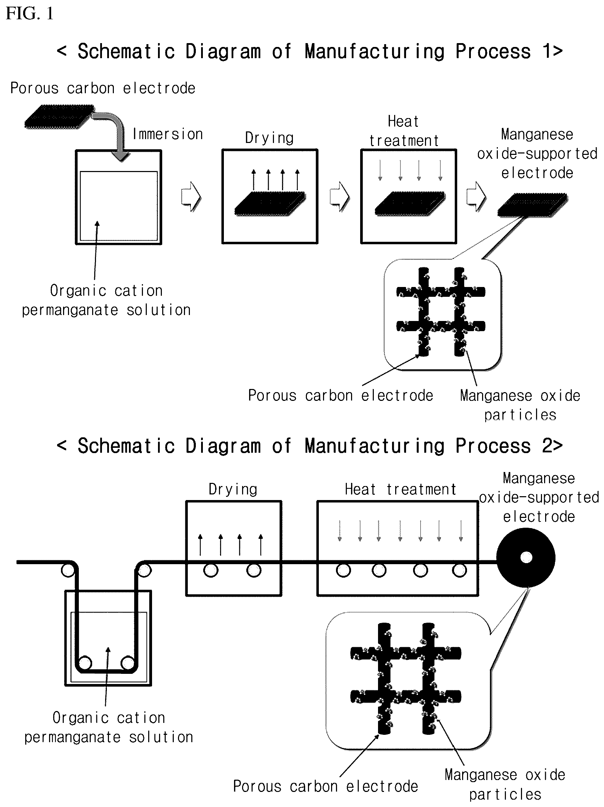

Schematic diagram 1 of the manufacturing process in FIG. 1 illustrates a method for manufacturing an electrode in which a surface of a porous electrode supports manganese oxide according to the present invention. A manganese oxide-supported electrode is manufactured by immersing a porous carbon-based electrode in an organic cation permanganate solution as a permanganate solution, drying the electrode, and then performing a heat treatment process.

Conventional manufacturing of manganese oxide-supported electrodes have utilized hydrothermal synthesis. However, the hydrothermal synthesis process has disadvantages such as difficulty in continuous processing and limitations requiring additional processes for washing and drying alkali ions after the production of manganese oxide.

The present invention can support manganese oxide on the surface of a porous carbon-based electrode through a heat treatment process after supporting the electrode in a permanganate solution. After the heat treatment process, a posttreatment (washing and drying) process to remove organic cations can be omitted, thereby improving process efficiency and further enabling a continuous process (Schematic diagram 2 of the manufacturing process in FIG. 1).

The formed manganese oxide can be in the form of nano-sized small particles due to the organic cation salt, and the oxidation number of the manganese oxide can be controlled by adjusting the heat treatment temperature. In particular, the high oxidizing power of the permanganate can induce changes in the surface morphology and oxygen functional groups of the carbon-based electrode. Furthermore, by applying organic cations containing phosphorus among various organic cations as the counter-cations of the permanganate, it is possible to dope various heteroatoms, such as phosphorus, which can improve reaction characteristics during the manganese oxide support process.

It is confirmed that the manganese oxide-supported carbon-based electrode according to the present invention has a high surface area, which dramatically improves vanadium oxidation/reduction reaction characteristics. Therefore, by applying the manganese oxide-supported carbon-based electrode of the present invention to a vanadium redox flow battery and a stacked secondary battery, it is possible to improve energy efficiency at high current density due to the enhanced reactivity of the electrode.

In one embodiment of the present invention, a potassium permanganate solution is prepared by dissolving potassium permanganate salt in water, and this is added to a solution in which a phosphorus-containing organic cation salt (e.g., methyl triphenyl phosphonium chloride) is dissolved in water to obtain a precipitate of a phosphorus-containing organic cation permanganate through a precipitation reaction.

The prepared phosphorus-containing organic cation permanganate is dissolved in water again to prepare an organic cation permanganate solution. Next, a porous carbon electrode is immersed in the phosphorus-containing organic cation permanganate solution for 15 to 30 minutes, dried at a temperature of 150°C or lower for 1 to 10 hours, and then heat-treated at a temperature of 100°C to 1,500°C in an air atmosphere or various atmospheres such as CO₂, Ar, and N₂ for 0.5 to 48 hours, thereby obtaining a phosphorus-introduced manganese oxide-supported electrode.

The present invention provides a manganese oxide-supported electrode manufactured by the above manufacturing method. The electrode includes manganese oxide having a manganese oxidation number of +2 to +4 on its surface. Specifically, the manganese oxide is in the form of MnO, Mn₃O₄, or MnO₂. In addition, the manganese oxide is present in the form of nanoparticles with a size of 10 to 500 nm.

The present invention provides a redox flow battery including the manganese oxide-supported electrode. Preferably, the redox flow battery is a vanadium redox flow battery.

Hereinafter, the present invention will be described in more detail through Examples. However, the present invention should not be construed as being limited thereto.

### Preparation Example: Preparation of methyl triphenyl phosphonium permanganate (MTPMnO₄) solution

As a permanganate, potassium permanganate (KMnO₄) was dissolved in water to prepare a permanganate solution (3.16 g of KMnO₄, 200 mL of water). This was added to a solution in which methyl triphenyl phosphonium chloride (MTPCl), which is a phosphorus-containing organic cation salt, was dissolved in water (6.44 g of MTPCl, 200 mL of water). A precipitation reaction was performed for 1 hour to obtain a precipitate of a phosphorus-containing organic cation permanganate. The obtained precipitate was washed with water and dried at 40°C under vacuum conditions to obtain a phosphorus-containing organic cation permanganate, methyl triphenyl phosphonium permanganate (MTPMnO₄).

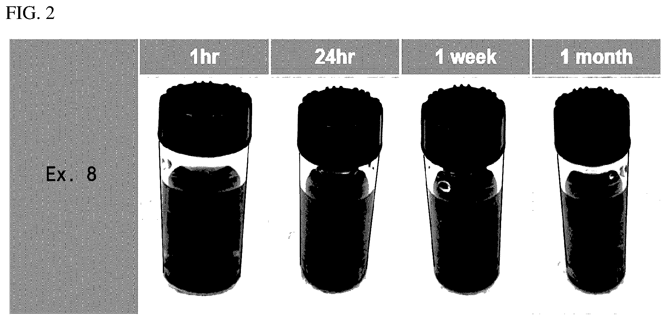

FIG. 2 shows the results of evaluating the room-temperature storage stability of the methyl triphenyl phosphonium permanganate (MTPMnO₄) solution (concentration of 0.05 mg/mL), confirming stability without any color change of the solution for one month.

### Examples 1 to 8

A 5 cm x 5 cm heat-treated carbon felt was immersed in a permanganate solution (concentration: 0.05 mg/mL) as shown in Table 1 below for 15 minutes and then dried at 80°C for 4 hours. Subsequently, manganese oxide-supported electrodes were manufactured through heat treatment in an air atmosphere for 2 hours at the temperatures specified in Table 1 below.

### Comparative Example 1

A commercial carbon felt electrode (manufactured by JNTG) was used as a porous carbon-based electrode.

### Comparative Example 2

The carbon felt electrode of Comparative Example 1 was heat-treated at 500°C for 5 hours in an air atmosphere.

**[Table 1]**

| Sample | Felt Type | Permanganate | Treatment Temp. | Treatment Atmosphere |
|---|---|---|---|---|
| Comp. Ex. 1 | Bare | - | - | - |
| Comp. Ex. 2 | Heat-treated | - | 500 | Ar |
| Ex. 1 | Heat-treated | KMnO₄ | 500 | Ar |
| Ex. 2 | Heat-treated | KMnO₄ | 500 | Air |
| Ex. 3 | Heat-treated | KMnO₄ | 800 | Air |
| Ex. 4 | Heat-treated | TBAMnO₄ | 500 | Ar |
| Ex. 5 | Heat-treated | TBAMnO₄ | 500 | Air |
| Ex. 6 | Heat-treated | TBAMnO₄ | 800 | Air |
| Ex. 7 | Heat-treated | TBAMnO₄ | 1000 | Air |
| Ex. 8 | Heat-treated | MTPMnO₄ | 800 | Air |

| | | | | |
|---|---|---|---|---|
| *TBAMnO₄: tetrabutylammonium permanganate *Note: Examples 1 and 2, and Examples 4 and 5, differ in that the heat treatment gas atmospheres are Ar and Air, respectively. | | | | |

### Measurement and Evaluation

The BET specific surface areas of the surfaces of the electrodes according to Examples and Comparative Examples were measured. Looking at the results, it can be confirmed that the specific surface area of the electrode treated with the organic cation permanganate solution increased by 8 to 10 times or more compared to the electrode before pretreatment (Comparative Example 1), and increased by about 6 to 8 times compared to the heat-treated electrode (Comparative Example 2).

**[Table 2]**

| Electrode | Specific Surface Area (m²/g) |
|---|---|
| Comparative Example 1 | 1.092 |
| Comparative Example 2 | 1.319 |
| Example 1 | 3.410 |
| Example 2 | 8.902 |
| Example 3 | 10.341 |

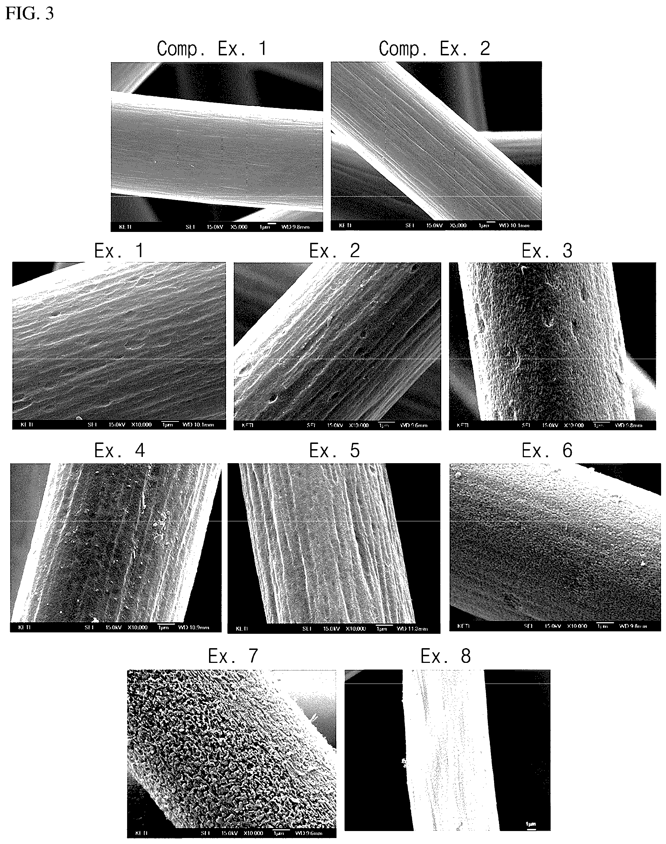

Scanning electron microscope (SEM) images of the surfaces of the electrodes according to Examples and Comparative Examples were taken (FIG. 3). As a result of the SEM surface analysis, roughness of the carbon fiber surfaces of the electrodes according to Examples is observed, and very small particles with a size of 10 to 100 nm are observed. The formed particles are presumed to be manganese oxide.

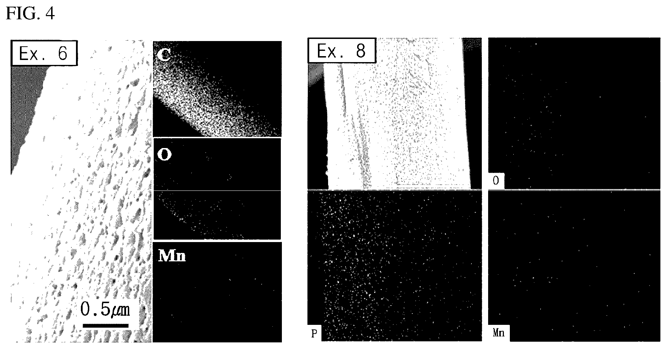

Elements C, O, P, and Mn on the surfaces of the carbon felt fibers were analyzed through energy dispersive X-ray spectroscopy (EDS) analysis on the surfaces of the electrodes according to Examples 6 and 8 (FIG. 4). As a result of the EDS analysis, as Mn and O elements are observed, the formed particles are presumed to be manganese oxide. Furthermore, since phosphorus (P) is clearly observed, it can be confirmed that phosphorus (P) was introduced through the manufacturing method of the present invention.

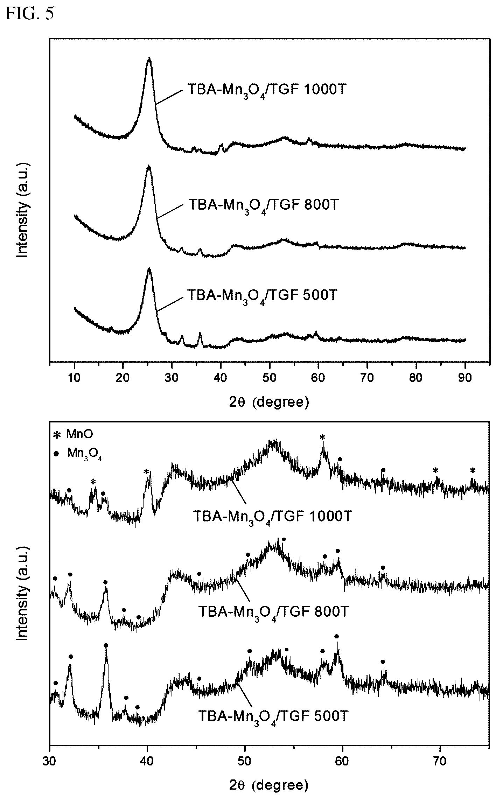

X-ray diffraction (XRD) was performed to analyze the crystal structure of the electrode according to Example 6. The results are shown in FIG. 5. It was confirmed that the material supported on the surface of the carbon felt was manganese oxide. A Mn₃O₄ crystal structure was observed at a heat treatment temperature of 500°C to 800°C, and a MnO crystal structure was observed from 1000°C. Changes in the crystallinity, size, and oxidation number of manganese oxide can be confirmed depending on the heat treatment temperature, which indicates that the form and oxidation number of manganese oxide can be controlled by the manufacturing method of the present invention.

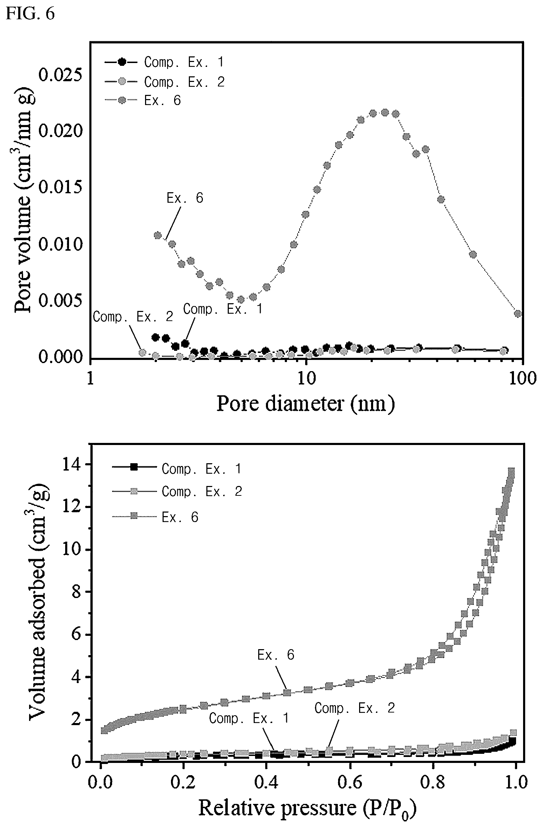

Brunauer-Emmett-Teller (BET) analysis was performed for specific surface area and pore analysis of the electrodes according to Comparative Examples 1 and 2 and Example 6 (FIG. 6). It was confirmed that the manganese oxide of the manganese oxide-supported electrode manufactured by the method applying the organic cation permanganate in the present invention maintains a particle size of about 100 nm even after a high-temperature heat treatment process.

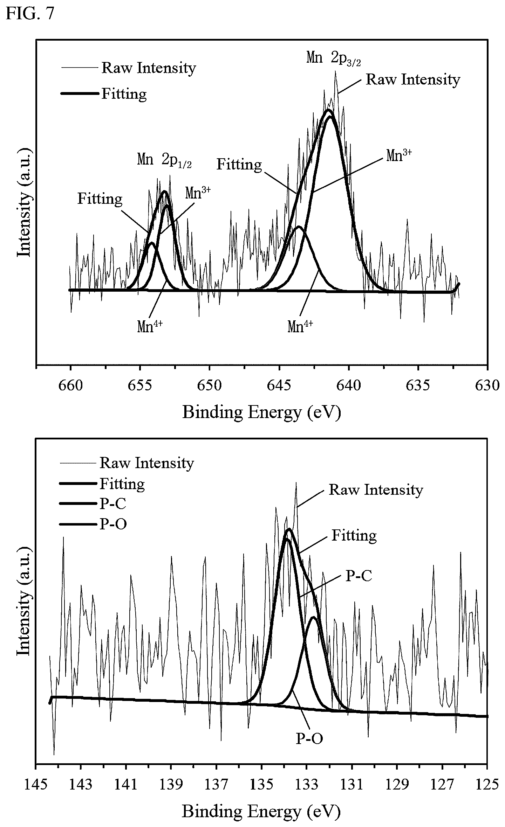

X-ray photoelectron spectroscopy (XPS) analysis of Mn 2p and P 1s was performed on the phosphorus-introduced, high-specific-surface-area manganese oxide-supported electrode of Example 8 (FIG. 7). Here, regarding the manganese oxide formed on the surface of the carbon electrode, it can be confirmed that manganese oxidation numbers of Mn²⁺ and Mn³⁺ are observed simultaneously, indicating that the manganese oxide formed therefrom is in the form of Mn₃O₄. Furthermore, the result of the P1s XPS analysis confirms that phosphorus was introduced into the surface of the carbon electrode.

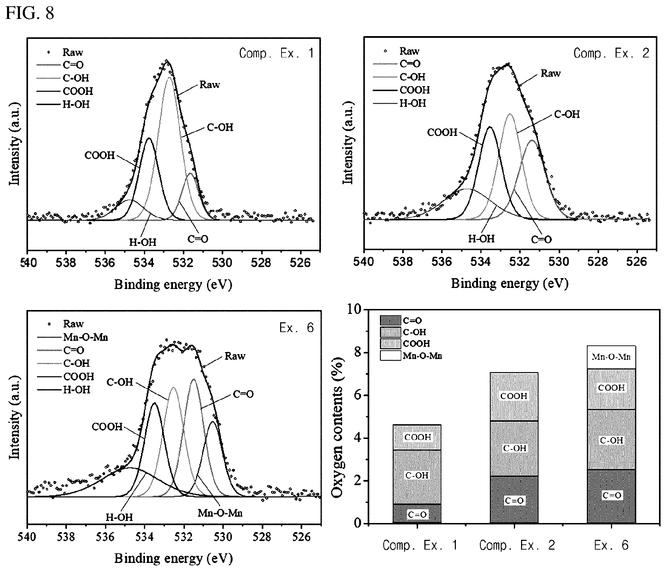

XPS analysis of O 1s was performed on the electrodes according to Comparative Examples and Example 6 (FIG. 8). It was confirmed that the ratio of -COOH increased in the heat-treated carbon felt electrode (Comparative Example 2) compared to the carbon felt before pretreatment (Comparative Example 1). In Comparative Example 2, heat treatment was performed in an air atmosphere to impart hydrophilicity, and the C=O groups on the surface increase through the heat treatment, thereby improving hydrophilicity.

In particular, in the case of the manganese oxide-supported electrode, it can be confirmed that the ratios of -C=O and -COOH increased compared to the heat-treated carbon felt electrode (Comparative Example 2). It can be confirmed that the surface oxygen functional groups are better developed in the manganese oxide-supported electrode than in the heat-treated electrode. This is considered to be a result of oxidizing surface carbons by the reduction reaction of permanganate. Furthermore, as Mn-O-Mn is also observed in the O 1s XPS analysis results, it is clearly evident that manganese oxide developed on the surface of the porous carbon electrode.

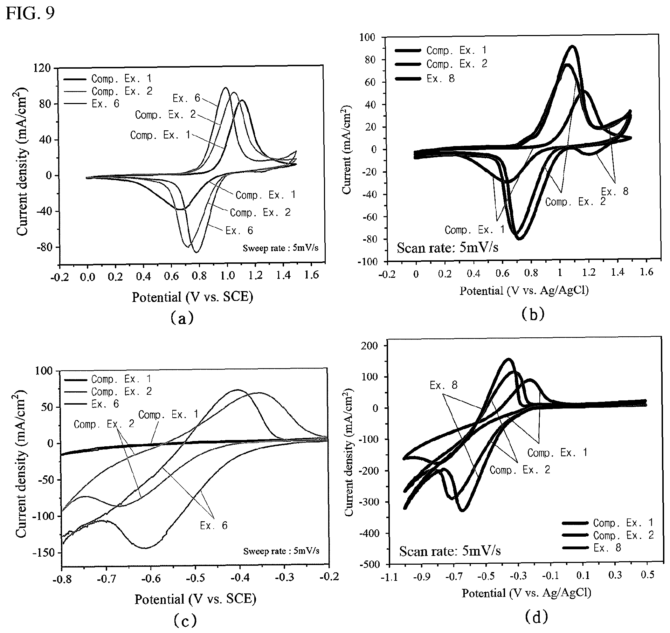

The degree of V⁴⁺ ↔ V⁵⁺ oxidation/reduction reaction was compared by cyclic voltammetry (CV) analysis [reference electrode: saturated calomel electrode, counter electrode: Pt mesh, electrolyte: 0.1 M VOSO₄ in 2.5 M H₂SO₄ solution, scan rate: 5 mV/sec] of the electrodes according to Comparative Examples and Example 6 (FIG. 9(a)). In the same manner, the V⁴⁺ ↔ V⁵⁺ oxidation/reduction reaction characteristics of the phosphorus-introduced, high-specific-surface-area manganese oxide-supported electrode (Example 8) were measured (FIG. 9(b)). It can be confirmed that the decrease in oxidation/reduction peak separation (ΔE) and the oxidation/reduction peak current ratio (I_{red}/Iₒₓ) characteristics are the most excellent.

Next, the degree of V²⁺ ↔ V³⁺ oxidation/reduction reaction was compared, and it can be confirmed that the V²⁺ ↔ V³⁺ oxidation/reduction reaction characteristics of the phosphorus-introduced manganese oxide-supported electrode (Example 8) exhibit the most excellent characteristics in terms of the decrease in oxidation/reduction peak separation (ΔE) and the oxidation/reduction peak current ratio (I_{red}/Iₒₓ) (FIGS. 9(c) and 9(d)).

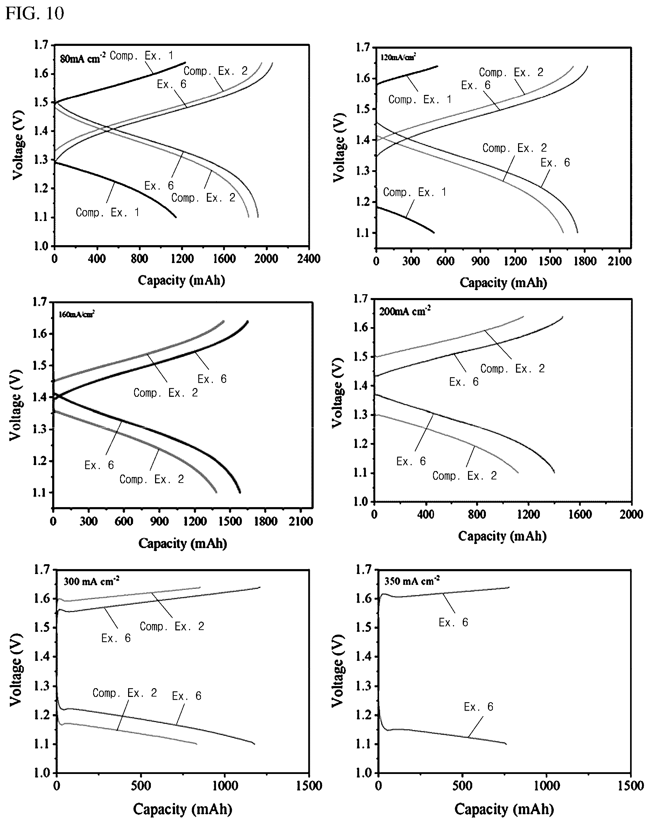

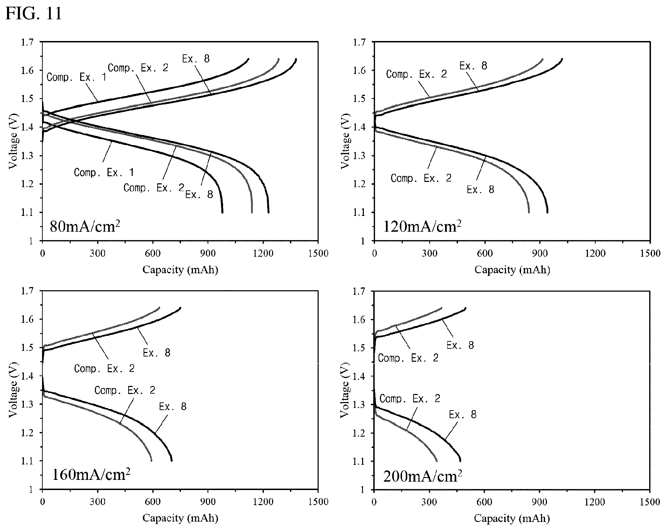

Vanadium redox flow battery unit cell evaluation was performed applying the electrodes according to Comparative Examples and Examples 6 and 8 (FIGS. 10 and 11). As the electrolyte, a 1.7 M VOSO₄ in 2.5 M H₂SO₄ electrolyte was applied, the electrode area was 5 cm x 5 cm, the electrode compression ratio was about 26%, and the battery charge/discharge cut-off voltage range was 0.8 to 1.7 V.

The vanadium redox flow battery unit cells applying the electrodes of Examples 6 and 8 showed improved voltage efficiency characteristics (reduction in overpotential) compared to those applying the electrodes of Comparative Examples 1 and 2, and in particular, the overpotential improvement effect was significantly pronounced under high current density conditions of a current density of 200 mA/cm². This is judged to be due to the improvement of the electrode reaction characteristics in the previous electrochemical characteristic analysis.

In addition, as shown in Table 3 below, the vanadium redox flow batteries applying the electrodes of Examples 6 and 8 exhibited high electrolyte utilization characteristics due to their excellent electrolyte utilization under high current density conditions. This is considered to be due to an increase in coulombic efficiency resulting from rapid electrode reaction characteristics under low concentration conditions, and a subsequent increase in electrolyte utilization.

**[Table 3]**

| | Comp. Ex. 1 | | | Comp. Ex. 2 | | | Ex. 6 | | | Ex. 8 | | |
|---|---|---|---|---|---|---|---|---|---|---|---|---|
| Current (mA/cm²) | CE (%) | VE (%) | EE (%) | CE (%) | VE (%) | EE (%) | CE (%) | VE (%) | EE (%) | CE (%) | VE (%) | EE (%) |
| 80 | 92.7 | 77.7 | 72.5 | 93.7 | 91.0 | 85.2 | 93.4 | 92.7 | 86.6 | 91.5 | 92.5 | 84.8 |
| 120 | 94.5 | 71.2 | 67.6 | 94.9 | 86.3 | 82.2 | 95.3 | 89.2 | 84.7 | 93.2 | 89.1 | 83.1 |
| 160 | - | - | - | 95.8 | 82.2 | 78.7 | 96.1 | 85.9 | 82.1 | 93.9 | 86.1 | 80.8 |
| 200 | - | - | - | 96.4 | 78.3 | 75.3 | 95.8 | 83.1 | 79.6 | 94.2 | 83.0 | 78.2 |
| 300 | - | - | - | 96.7 | 67.8 | 66.4 | 97.7 | 73.6 | 71.9 | 94.8 | 75.4 | 71.5 |

This invention was made with the support of the project described below.
- Project Identification Number: RS-2024-00407015
- Government Department: Ministry of Science and ICT
- Project Management Agency: National Research Foundation of Korea (NRF)
- Research Program Name: Key Technology Development Program
- Research Project Title: (C)Development of Advanced Technology for 120 Wh/kg Ultra-Long Life Aqueous Zinc Secondary Batteries Based on Multi-Electron Complexed Iodine Reaction
- Project Executing Institution: Korea Electrotechnology Research Institute (KERI)
- Research Period: April 1, 2024 ~ December 31, 2028

## Claims

1. A method for manufacturing a manganese oxide-supported electrode, comprising:
immersing a carbon-based electrode in a permanganate solution; and
drying and heat-treating the immersed electrode.

2. The method of claim 1, wherein the permanganate solution is a phosphorus-based organic cation permanganate solution or an ammonium-based organic cation permanganate solution.

3. The method of claim 1, wherein a concentration of the permanganate solution is 0.01 mg/mL to 100 mg/mL.

4. The method of claim 1, wherein the immersion time is 15 to 30 minutes.

5. The method of claim 1, wherein the drying is performed at a temperature of 150°C or lower for 1 to 10 hours.

6. The method of claim 1, wherein the heat treatment process adopts at least one type of gas selected from Air, Ar, N₂, and CO₂, a heat treatment temperature is between 100°C and 1,500°C, and a heat treatment time is 0.5 to 48 hours.

7. The method of claim 1, wherein the method is performed as a continuous process.

8. A manganese oxide-supported electrode manufactured by the method according to any one of claims 1 to 7.

9. The manganese oxide-supported electrode of claim 8, wherein the electrode supports manganese oxide having an oxidation number of +2 to +4.

10. The manganese oxide-supported electrode of claim 9, wherein the manganese oxide is in a form of nanoparticles with a size of 10 to 500 nm.

11. A redox flow battery comprising the manganese oxide-supported electrode according to claim 8.

12. The redox flow battery of claim 11, wherein the redox flow battery is a vanadium redox flow battery.
